# EUROPEAN PATENT SPECIFICATION

(11) **EP 1 263 252 B1**
(45) Date of publication and mention of the grant of the patent: **14.06.2006**
(21) Application number: 02009307.6
(22) Date of filing: 30.04.2002
(51) Int. Cl.: H04Q 7/38

(54) **Apparatus, method, program and storage medium for correcting a position determination**
Apparat, Verfahren, Programm und Aufzeichnungsmedium zur Korrektur einer Standortbestimmung
Appareil, procédé, programme et moyen d'enregistrement pour la correction d'une détermination de la location

(30) Priority: 01.06.2001 JP 2001167083
(43) Date of publication of application: 04.12.2002
(73) Proprietor: NTT DoCoMo, Inc., Tokyo 100-6150 (JP)
(72) Inventor: Odakura, Atsushi, Int. Prop. Dpt., NTT DoCoMo, Inc, Chiyoda-ku, Tokyo 100-6150 (JP); Kariya, Aki, Int. Prop. Dpt., NTT DoCoMo, Inc, Chiyoda-ku, Tokyo 100-6150 (JP); Yamamoto, Hiroyuki, Int. Prop.Dpt., NTT DoCoMo,Inc, Chiyoda-ku, Tokyo 100-6150 (JP); Murata, Katsutoshi, Int. Prop.Dpt., NTT DoCoMo,Inc, Chiyoda-ku, Tokyo 100-6150 (JP)
(74) Representative: HOFFMANN EITLE

(56) References cited:
- EP-A- 0 306 088
- EP-A- 1 102 510
- WO-A-99/09374
- FR-A- 2 801 158
- GB-A- 2 298 539
- US-A- 5 995 023

## Description

### Technical Field

The present invention relates to a portable terminal device for correcting the measured position of a location and a method for correcting a measured location.

### Background Art

Portable terminals which are used for navigation are commonly known and used.

Terminals of this type are able to determine the location of the user during navigation, and calculate the path across a latitude and longitude matrix from the measured position of a location of the destination, and display this information. The measuring methods used in this case are, for instance, the ones which use PHS (Personal Handyphone System: registered trademark) or GPS (Global Positioning System).

When a PHS is used, for instance, measuring is carried out as follows.

A PHS terminal which the user carries, receives annunciation signals transmitted from a plurality of base stations of the PHS network and specifies 2 or 3 annunciation signals in descending order of strength by measuring their electric field strength. This annunciation signal contains identification information on the base station from where it is transmitted, and the PHS terminal can identify the base station from where the annunciation signal was transmitted by referring to this identification information. At this point, the location of each base station is already known; thus, the distance between the location of the PHS terminal and the location of the destination base station can be calculated and the navigation path drawn on the basis of the identification information contained in the annunciation signal transmitted from the base station.

Incidentally, the navigable scope of a PHS network is determined by a radio cell formed by a base station of the PHS network. The radio cell is generally called a micro cell, and its cell domain is regarded as relatively small. The size of this cell domain is indeed some hundred meters in diameter.

Therefore, if the location of a PHS terminal is measured by the above mentioned measuring method, an error of 100 to 500 meters usually results. And there is a fear that the precise navigation path cannot be determined when navigation is carried out.

EP 0 306 088 A discloses a navigation device comprising a keyboard for receiving input operations performed by a user, a display for displaying maps and text information, a navigation system for obtaining location data indicating the location of the user and a map displaying controlling means for displaying the location indicated by the location data obtained by the navigation system on a map display.

US 5,995,023 A relates to an orientation and navigation device with satellite support providing for a current vehicle position to be displayed on a map. To make corrections in the event of loss of orientation, a satellite receiver is employed, which calculates a new vehicle position from the received satellite data and bases the dead-reckoning of this new vehicle position. Since the calculation satellite orientation position is encumbered with variation range, an optimisation is performed by means of a low-pass filter and empirically determined values. Further, it is explained that it is favourable for check-testing purposes of the satellite-based position finding that this finding is outputted on a display. This allows the driver to visualize the measured position in relation to a displayed map. Also, by using appropriate cursor keys, it is simple to manually correct the position of the vehicle on the displayed map.

The present invention takes into consideration the limitations of the above mentioned prior art and its object is to provide a portable terminal device by which the error of the measured outcome can easily be corrected. Another object of the invention is to provide a method for correcting a measured location.

### Disclosure of Invention

To solve the problem outlined above, according to the present invention there is provided a portable terminal device having the features of claim 1.

Further, to solve the object outlined above, there is provided a location correction method having the features of claim 17.

Still further, to solve the object outlined above, according to the present invention there is provided a program for causing a computer to execute different processes according to claim 23 and related computer readable recording medium according to claim 26.

### Brief Description of Drawing

Fig. 1 is a block diagram showing the configuration of the entire system which pertains to one embodiment of the present invention.
Fig.2 is a block diagram showing the configuration of a PHS terminal of the same embodiment.
Fig.3 is the ground plan showing the external appearance of a PHS terminal of the same embodiment.
Fig.4 is an explanatory diagram showing direction information of the same embodiment.
Fig.5 is a block diagram showing the configuration of the path searching server of the same embodiment.
Fig.6 is a flowchart showing the operation of the CPU of a PHS terminal of the same embodiment.
Fig.7 is a flowchart showing the operation of the CPU of a PHS terminal of the same embodiment.
Fig.8 is a pattern diagram showing a screen example to be displayed on the liquid crystal display of a PHS terminal of the same embodiment.
Fig.9 is a pattern diagram showing a screen example to be displayed on the liquid crystal display of a PHS terminal of the same embodiment.
Fig.10 is a pattern diagram showing a screen example to be displayed on the liquid crystal display of a PHS terminal of the same embodiment.
Fig.11 is a pattern diagram showing a screen example to be displayed on the liquid crystal display of a PHS terminal of the same embodiment.
Fig. 12 is a pattern diagram showing a screen example to be displayed on the liquid crystal display of a PHS terminal of the same embodiment.
Fig.13 is a pattern diagram showing a screen example to be displayed on the liquid crystal display of a PHS terminal of the same embodiment.
Fig.14 is a pattern diagram showing a screen example to be displayed on the liquid crystal display of a PHS terminal of the same embodiment.
Fig.15 is a pattern diagram showing a screen example to be displayed on the liquid crystal display of a PHS terminal of the same embodiment.

### Embodiment of the Invention

Hereafter, the embodiment of the present invention will be explained by referring to figures.

### A: Configuration

### (1) Entire Configuration of the System

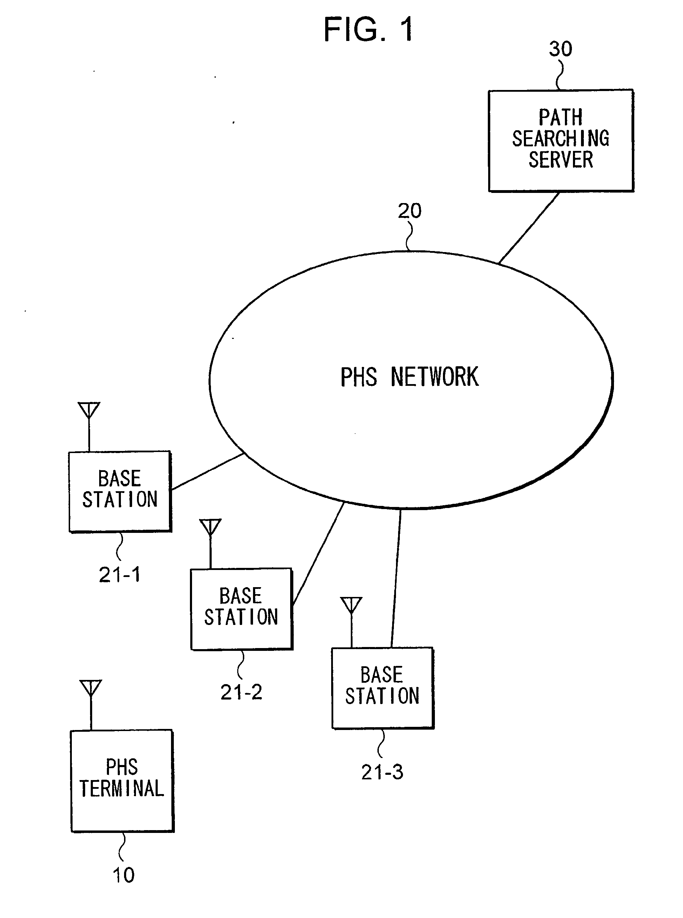

Fig.1 is a block diagram showing the entire configuration of the system which pertains to the embodiment. As shown in Fig.1, this system is equipped with PHS terminal 10 which a user carries, PHS network 20 which serves PHS terminal 10, and path searching server 30 which is connected to PHS network 20.

PHS network 20 consists of base stations 21-1 to 21-3 installed at intervals of some hundred meters; a switching station (not shown) for performing circuit switching within PHS network 20; communication lines (not shown) for connecting base stations 21-1 to 21-3 to the switching station and so forth. Each base station 21 forms a radio cell of approximately a hundred meter radius and transmits annunciation signals containing the base station ID (IDentification) inherent to each base station 21 within this radio cell on a constant basis.

Although only three base stations 21-1 to 21-3 are shown in Fig.1, many more are actually installed throughout the entire service area of PHS network 20. The configuration and operations of all these base stations 21-1 to 21-3 are the same; hence, they will be collectively referred to as base station 21 hereafter.

PHS terminal 10 performs data communication with path searching server 30 via PHS network 20 by performing radio communication with base station 21 by TDMA (Time Division Multiple Access) system.

PHS terminal 10 is equipped with the function of intermittently receiving annunciation signals transmitted from a plurality of base stations 21 by using an appropriate channel out of a plurality of channels set up by TDMA system and detecting the electric field strength of the received annunciation signal. The base station IDs (IDentifications) contained in these annunciation signals and the electric field strength detected by PHS terminal 10 are used for detecting the location of PHS terminal 10.

Path searching server 30 stores the map data for showing maps of various regions and is the computer for providing the path searching service to the user of PHS terminal 10 based upon this map data. More specifically, path searching server 30 calculates the position of the location of PHS terminal 10 based upon the base station ID (IDentification) given by PHS terminal 10, or calculates the position of the current location and the most appropriate path to the destination designated by PHS terminal 10 and transmits these calculation outcomes to PHS terminal 10 via PHS network 20.

### (2) Configuration of PHS Terminal 10

Next, the configuration of PHS terminal 10 will be explained.

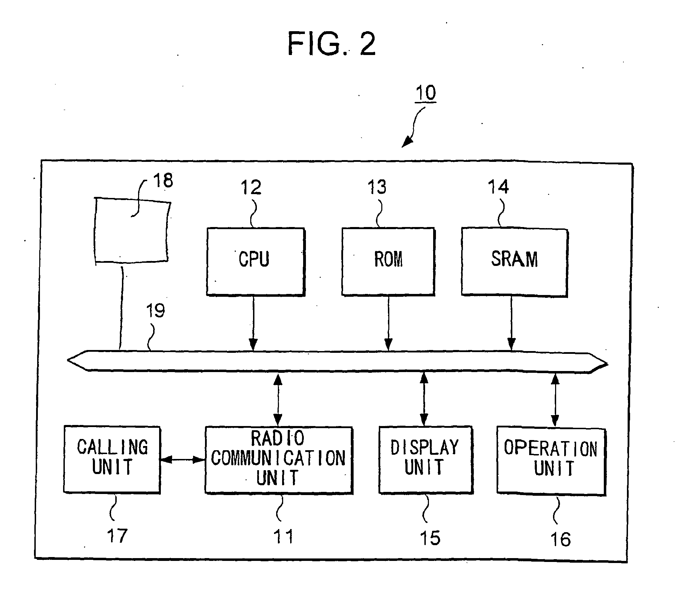

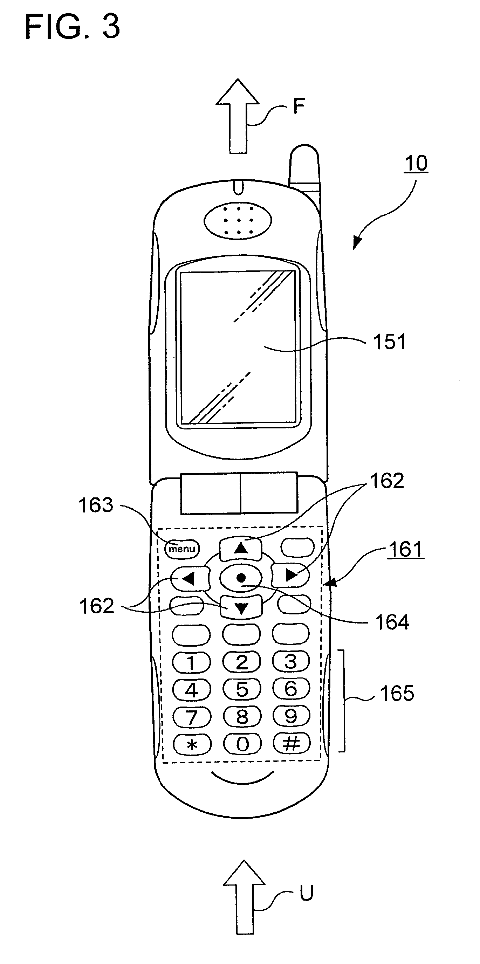

Fig.2 is a block diagram showing the electric configuration of PHS terminal 10. Fig.3 is the ground plan showing the external appearance of PHS terminal 10.

As shown in Fig.2, PHS terminal 10 is equipped with radio communication unit 11, the CPU (Central Processing Unit) 12, ROM (Read Only Memory) 13, SRAM (Static Random Access Memory) 14, display unit 15, operation unit 16, calling unit 17, ground magnetic sensor unit 18 and bus 19 for connecting these.

Radio communication unit 11 is equipped with an antenna which is not shown, a frequency synthesizer, TDMA processing circuit, the electric field strength detecting circuit and so forth, and performs synchronized radio communication with base station 21 of PHS network 20. The electric field strength detecting circuit detects the electrical field strength of the annunciation signals intermittently received from each base station 21.

Several kinds of control programs and data are stored in ROM 13. With regard to the stored data, there is menu screen data selection for displaying several kinds of service menus which can be provided to the user. With regard to a control program, there is the path guiding program for showing the user the path by displaying a map on display unit 15. The data communication is performed with path searching server 30 during this process.

SRAM 14 is the memory to be used as the work area of CPU 12 in which the program for CPU 12 is executed, or several kinds of data are temporarily stored.

Display unit 15 consists of a liquid crystal display, a crystal driver for activating this liquid crystal display and so forth, and displays several kinds of information such as a map and a text under the control of CPU 12.

Operation unit 16 consists of a keypad, the key detecting circuit which is connected to this key pad and so forth. The key detecting circuit produces detection signals in response to the keypad operation by the user, and provides the produced detection signals to CPU 12 via bus 19. CPU 12 grasps the user's keypad operation by detection signals, and executes the process in response to this operation.

Calling unit 17 consists of a microphone, a speaker and voice CODEC which the user needs for calling.

Ground magnetic sensor unit 18 detects the direction toward which PHS terminal 10 is oriented, produces direction information on the detected direction and provides this to CPU 12 via bus 19. CPU 12 displays the map on the liquid crystal display according to the provided direction information.

In the present embodiment, "the direction which PHS terminal 10 is oriented toward" will be the direction shown by arrow F in Fig.3, and the angle formed between "the direction which PHS terminal 10 is oriented toward" and the benchmark direction (in this case, the north) will be the direction information θ. In this case, the presupposition is that liquid crystal display 151 is more or less parallel to the ground.

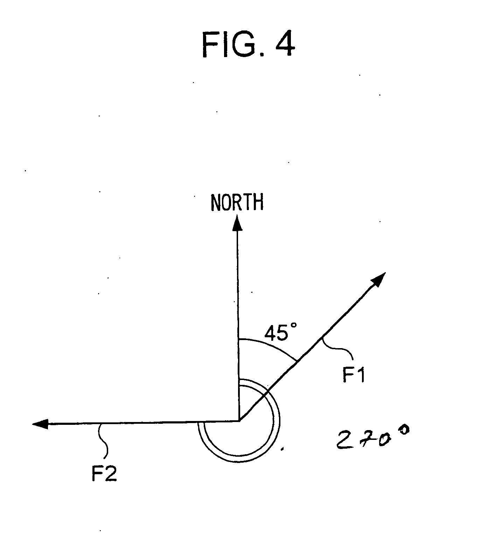

For instance, in the explanatory diagram of Fig.4, when the direction of PHS terminal 10 turns toward the right by 45 degrees from the north as indicated by arrow F1 (in other words, when PHS terminal 10 is oriented toward the northeast), the direction information θ is equal to 45 degrees. Also, when the direction of PHS terminal 10 turns toward the right by 270 degrees from the north as indicated by arrow F2 ( in other words, when PHS terminal 10 is oriented toward the west), the direction information θ is equal to 270 degrees.

For instance, when PHS terminal 10 is oriented toward the northeast, CPU12 displays the map by allowing the direction PHS terminal 10 is oriented toward ( the northeast) and the direction of the northeast on the map to correspond to each other on the basis of direction information θ being equal to 45 degrees. This is because the position of the location can be determined more easily by allowing the direction of the map the user looks at to correspond to the direction on the map. The user looks at the map toward the direction of arrow U as shown in Fig.3.

Next, by referring to Fig.3, the external configuration of PHS terminal 10 will be explained.

As shown in Fig.3, in the front face of PHS terminal 10, liquid crystal display 151 and keypad 161 are installed.

Keypad 161 is equipped with keys 162 to 165 which are explained as follows.

By pressing any key of cursor keypad 162, the user can move the cursor by means of a screen control toward a direction shown by an arrow indicated on the upper face of each key.

Next, key 163 is the menu key, and as menu key 163 is pressed by the user the menu screen in which the menu of several kinds of processes is listed will be displayed in the liquid crystal display.

Similarly, key 164 is the determination key, and as determination key 164 is pressed by the user, the process displayed in liquid crystal display 151 will be determined, and that process will be executed by CPU 12.

And, key 165 is the numeric keypad, and as any key of numeric keypad 165 is pressed by the user, the number or the letter which corresponds to the pressed key will be displayed.

### (3) Configuration of Path Searching Server 30

Next, the configuration of path searching server 30 will be explained.

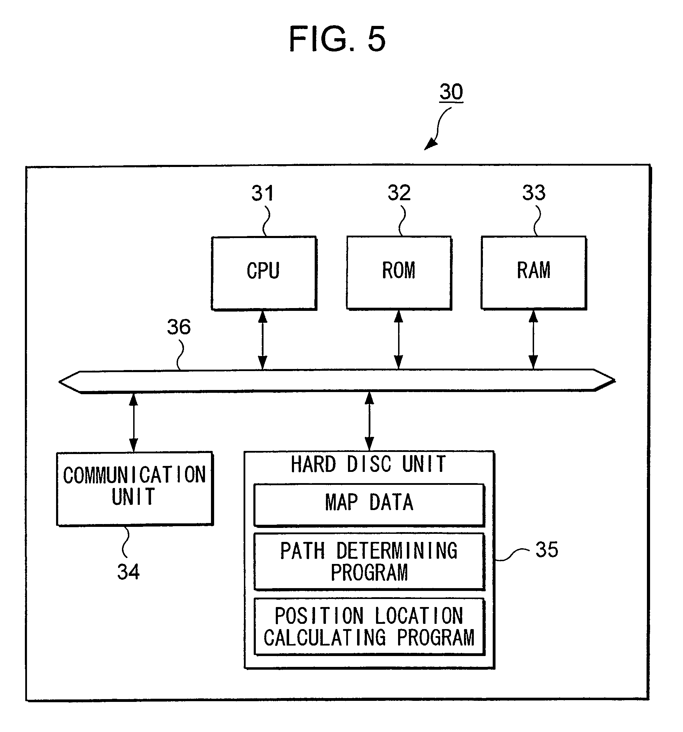

Fig.5 is the block diagram showing the configuration of path searching server 30. As shown in Fig.5, path searching server 30 is equipped with CPU 31, ROM 32, RAM 33, communication unit 34, hard disc unit 35, and bus 36 which connects these to each other.

The program to execute basic control of each unit of a server such as IPL (Initial Program Loader), is stored in ROM 32. CPU 31 reads out these programs and executes the basic control process for each unit of path searching server 30. RAM 33 temporarily stores several kinds of data and is used as the work area of CPU 31 where the program to be carried out by CPU 31 is executed.

Communication unit 34 consists of the connection interface for connecting with PHS network 20 or a modem, and performs data communication with PHS terminal 10 via PHS network 20.

Hard disc device 35 stores the map data presented on a latitude and longitude matrix; the position location calculating program for determining the location of PHS terminal 10; and the path determining program for determining the most appropriate path from the current location to the destination based upon the map data.

The map data stored in hard disc device 35 is in the configuration of vector data. Specifically, vector data displays stored map data such as roads, buildings and so forth ( referred to as map elements hereafter) which make up the map as a polygon and text data wherein names of each map element are correlated. The coordinate values of map elements which make up the vector data are presented on a latitude and longitude matrix. Thus, in the present embodiment, the above mentioned vector data configuration is adopted as opposed to the raster configuration. The vector data configuration hierarchically retains a plurality of map data and correlates the map data to various scales, thereby enabling the processes of enlarging and reducing the map to be carried out continuously at the scale the user wishes.

The position location calculating program contains a base station table (not shown) in which base station IDs (IDentifications) of each base station 21 and latitude-longitude data indicating locations of each base station 21 corresponding to each other are recorded. This base station table is used for determining the location of PHS terminal 10.

The path searching program contains the map element table in which addresses and telephone numbers of the buildings in each map element and the latitudes and longitudes indicating locations of these map elements corresponding to each other are recorded. This map element table is used for specifying the location of the destination designated by the user.

### B: Operation

Next, operations of the embodiment which is in the above mentioned configuration will be explained.

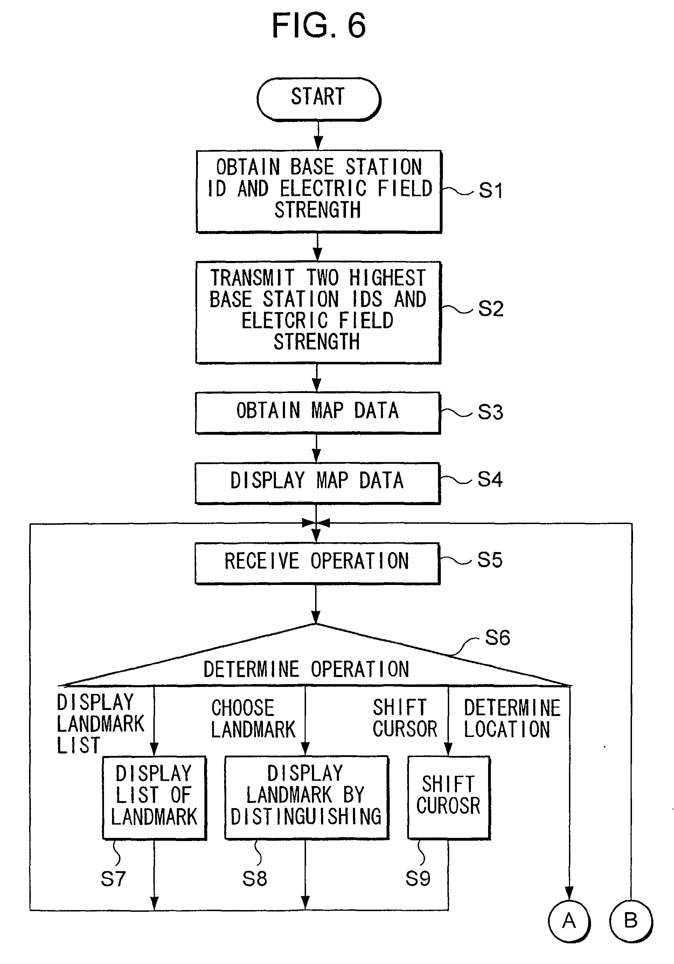

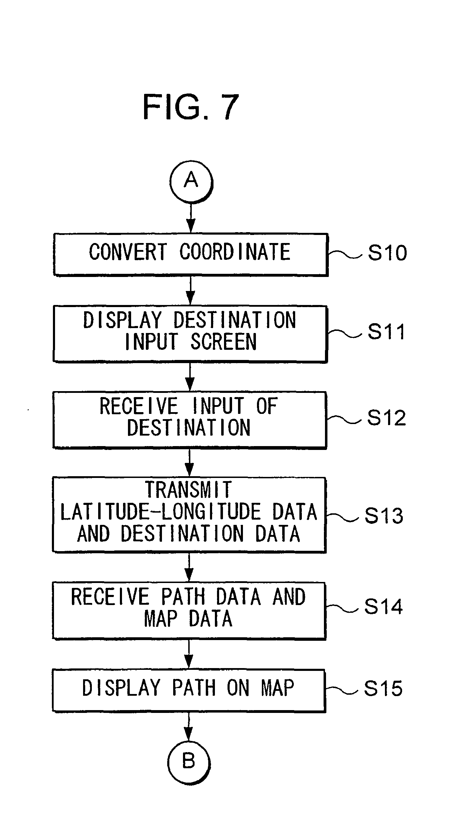

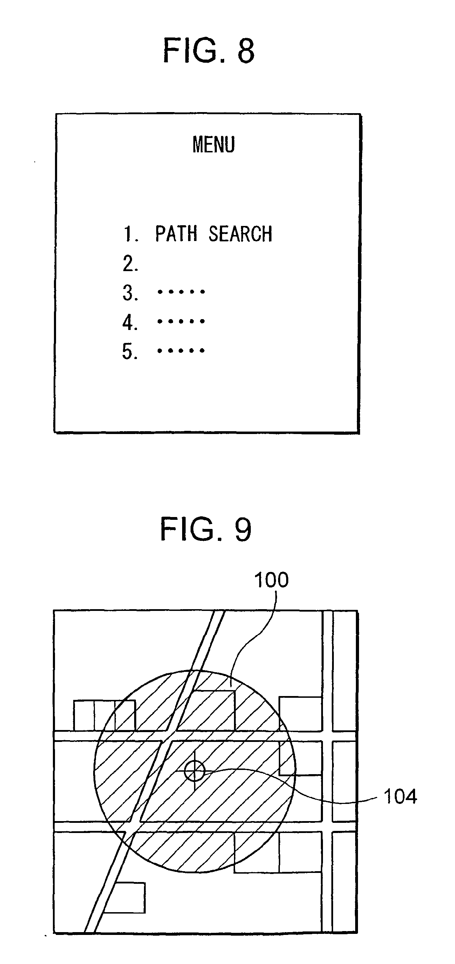

Fig.6 and Fig.7 are flowcharts showing the operation of CPU 12 of PHS terminal 10 when a path search is carried out. Also, Fig.8 to Fig.15 show some examples of the screen displayed in liquid crystal display 151.

### (1) Operations for Displaying the Current Location

First, as the user presses menu key 163 of the keypad, CPU 12 of PHS terminal 10 reads out the menu screen data stored beforehand in ROM 13 and displays the menu screen shown in Fig.8 in liquid crystal display 151.

As the user operates cursor keys 162 and presses determination key 164 after choosing "1.Path Search" displayed in the menu screen, CPU 12 activates the path guiding program stored in ROM 13 in response and begins the process shown in Fig.6.

In Fig.6, CPU 12 first obtains information on the electric field strength of the annunciation signal from the electric field strength detecting circuit of radio communication unit 11 (Step S1). This information contains the two highest values of the electric field strength of each annunciation signal received from a plurality of base stations 21, and the base station IDs (IDentifications) extracted from annunciation signals having such electric field strength.

Then CPU 12 transmits the obtained values of electric field strength and the base station IDs (IDentifications) to path searching server 30 via radio communication unit 11 (Step S2).

As path searching server 30 receives the values of electric field strength and base station IDs (IDentifications), it calculates the latitude and the longitude showing the location of PHS terminal 10 by executing the location calculating program in response. Specifically, path searching server 30 specifies the latitude and the longitude showing the locations of base stations 21 shown by 2 base station IDs (IDentifications) by referring to the base station table stored within hard disc device 35. Then path searching server 30, on the line connecting two designated locations, determines the latitude and the longitude of the location which divides the line at the radius of the electric field strength from the base stations. The circle area of the predetermined radius with the center being the location determined shows the error span of the measured position location, and the radius of this circle area is some hundred meters in the present embodiment. The latitude and the longitude showing the center of this circle area along with the value showing the radius of the above mentioned circle area will be the location data showing the location of PHS terminal 10.

The location of PHS terminal 10 being determined in this manner, path searching server 30 reads out the map data of the designated area (for instance, a 500-meter radius) with this location as the center from the base station table stored on the hard disc device 35, and transmits the map data along with the determined location data as described above to PHS terminal 10. The map data to be transmitted to PHS terminal 10, as mentioned above, contains the vector data for displaying each map element as a polygon and the text data showing the names of each map element.

As radio communication unit 11 receives the map data and the location data, CPU 12 of PHS terminal 10 temporarily stores these in SRAM 14 (Step S3).

Then, CPU 12 converts the map data and the location data from the coordinate system presented in the latitude and the longitude matrix to the X-Y coordinate system in which the vertical direction is the X coordinate and the horizontal direction is the Y coordinate of liquid crystal display 151. Furthermore, CPU 12 obtains the direction information from ground magnetic sensor unit 18 and displays the map and the location of PHS terminal 10 in liquid crystal display 151 by matching the obtained location information and the direction on the map (Step S4).

As a result, as shown in Fig.9, the map shown by the map data given by path searching server 30 with which circle area 100 shown by the location data given by path searching server 300 overlaps is displayed in liquid crystal display 151. If PHS terminal 10 is oriented toward the northeast in this case, the direction of the map displayed in liquid crystal display 151 is northeast on the screen. In this case, cursor 104 is displayed at the center of circle area 100.

By this display of the map, the user can know that he/she is located within the area shown by circle area 100. Then, as the user performs a specific operation by using keypad 161, the scale of the map display changes in response, and the map will either be enlarged or reduced.

### (2) Operations for Correcting the Current Location

For searching even more appropriate path, the user needs to determine the precise current location by changing the map display scale accordingly and so forth, and assign the determined current location to PHS terminal 10 while the map is displayed as shown in Fig.9. However, even if only figures such as roads or buildings are displayed, determining the location of the user is often difficult.

Hence, in the present embodiment, by listing every map element (referred to as landmarks hereafter) existing within area 100 shown by location data as a text and prompting the user to choose the nearest landmark out of that list, determining the current location by the user is facilitated. That operation is explained hereafter.

First, in Step S4 in Fig.6, as the user designates "Landmark List Display" by operating keypad 161, CPU 12 receives this operation (Step S5), and identifies the received operation (Step S6).

In this case, the operation displays the landmark list (Step S6; landmark list display); hence, CPU 12 extracts every map element which exists within circle area 100 shown by the location data stored in SRAM 14. Furthermore, the text data which corresponds to the extracted map elements are extracted from SRAM 14 and are listed (Step S7).

More specifically, CPU 12 performs the following processes.

First, CPU 12 with the center of circle area 100 (X₀, Y₀) and the radius R (meters) of the circle area, extracts every vector data contained in circle area 100 which is indicated by (X-X₀)²+(Y-Y₀)²=R² on the map data which were converted into the X-Y coordinate system. Then CPU 12 reads out the text data which corresponds to the extracted vector data and is stored in SRAM 14, and lists these. As Step S7 ends, the process of CPU 12 goes back to Step S5 and waits for further input.

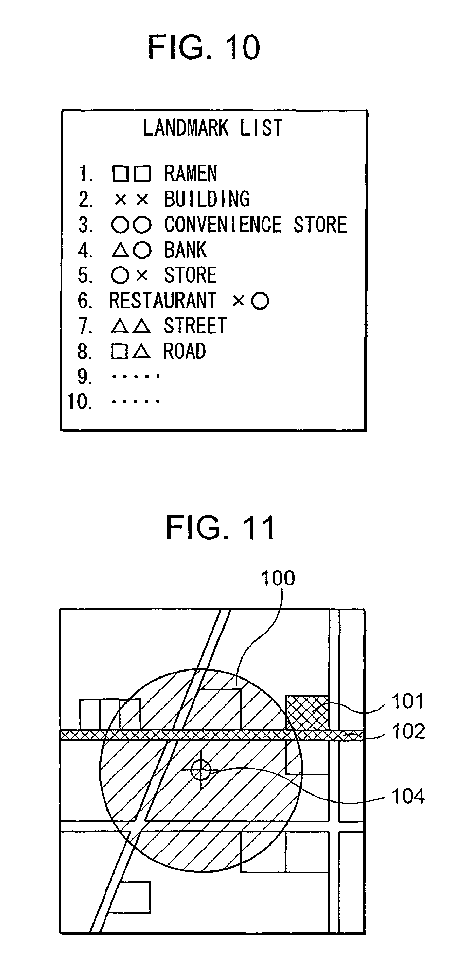

Through this process, the names of the landmarks which exist within circle area 100 shown by the location information are listed in liquid crystal display 151 as shown in Fig.10. As the user presses cursor key 162 in which the downward arrow is indicated on the upper face, the lists of landmarks which have not appeared will be displayed in sequence. Also, as opposed to displaying several landmarks together as shown in Fig.10, the display style of sorting by categories such as "restaurant", "shop" or "the name of the road" is possible. Out of this type of the landmark list, the user needs to find the landmark nearest to him/her.

Then as the user operates keypad 161, determines the nearest landmark to him/her chosen from the displayed landmark list, CPU 12 receives these operations (Step S5) and identifies the operation (Step S6). In Step S5, the user can choose a plurality of landmarks simultaneously. In this case, "7. ΔΔ street" and "3. ○ ○ convenience store" were chosen from the landmark list shown in Fig.10 assuming that the user is in front of "○○ convenience store" by "△△ street."

As the operation of choosing landmarks (Step S6; landmark choice) is carried out, CPU 12 reads out the vector data which corresponds to the text data referring to the chosen landmark, and displays the polygon zone indicated by this vector data in a prominent color such as red or yellow (Step S8). By this type of operation, "△△ street" 102 and "○○ convenience store" 101 chosen by the user are displayed in a different display mode which can be distinguished from other map elements on liquid crystal display 151 as shown in Fig.11. As Step S8 ends, the process of CPU 12 goes back to Step S5 and waits for further input.

As the user operates cursor keys 162 while the map is displayed, CPU 12 receives this operation (Step S5), after confirming that shifting of the cursor was commanded (Step S6; cursor shift), controls the screen to shift cursor 104 on the map displayed on liquid crystal display 151 (Step S9).

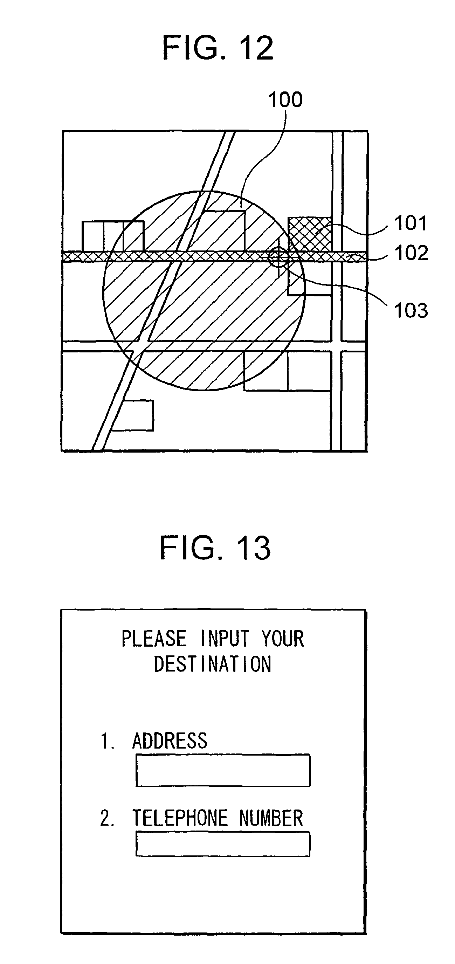

Then, as shown in Fig.12, as the user shifts cursor 104 to the location in front of "○○ convenience store" by "ΔΔ street" (the location shown by mark 103 in Fig.12) and presses determination key 164, CPU 12 receives this operation (Step S5), after confirming that the determination of cursor 104's location was commanded stores the X-Y coordinate indicating the location of cursor 104 after converting into the latitude and the longitude in SRAM 14 (Step S10 in Fig.7).

Then CPU 12 displays the screen shown in Fig.13 to prompt the user to input the destination (Step S11). As in the example shown in Fig.13, the method for inputting the address of the destination and the method for inputting the telephone number of the destination are both methods for specifying the destination.

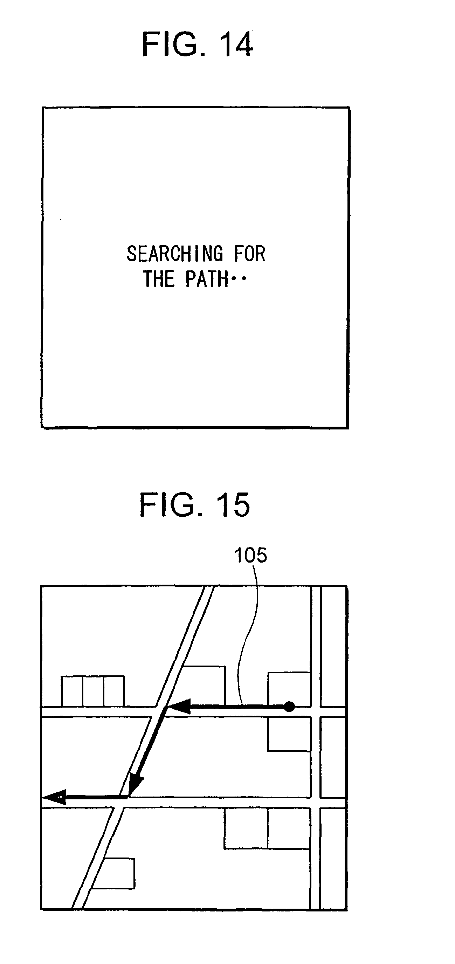

As the user inputs the destination by using numeric pad 165, CPU 12 receives the input operation (Step S12) and transmits the latitude-longitude data showing the location of cursor 104 stored in SRAM 14 and the destination data showing the address of the destination to path searching server 30 via radio communication unit 11 (Step S13) which the user input. Hereafter, the screen shown in Fig.14 is displayed in liquid crystal display 151 till the process in Step S15 begins, and notifies the user that the path is being searched.

On the other hand, as path searching server 30 receives the latitude-longitude data and the destination data, it carries out the process of searching for the path on the basis of the received information. Specifically, path searching server 30 first obtains the latitude and the longitude of the destination by referring to the map element table with the address indicated by the destination data as the key. Then path searching server 30 determines the most appropriate path from the current location to the destination by referring to the received latitude and longitude data of the current location, the calculated latitude and longitude of the destination and the stored map data.

As the path is determined in this manner, path searching server 30 transmits the path data showing the calculated path and the map data of the vicinity of this path to PHS terminal 10.

As radio communication unit 11 receives the path data and the map data, CPU 12 of PHS terminal 10 obtains the data (Step S14) and converts from the coordinate system indicated by the latitude and the longitude to the X-Y coordinate system and displays on liquid crystal display 151 (Step S15). By this procedure, path 105 indicated by the path data given by path searching server 30 is displayed overlapping with the map indicated by the map data given by path searching server 30 in liquid crystal display 151 as shown in Fig.15.

The user can confirm the path he/she should proceed on in greater detail by scrolling the displayed area on the map toward the top, the bottom, the right or the left, or by enlarging or reducing the map by pressing keypad 161.

As explained above, the user can recognize the area he/the is currently in by displaying the location obtained by using base stations 21 of PHS terminal 20 together with its error span on the map in the present embodiment.

Also, the user can determine his/her current location more easily since the landmarks which are the reference points for correcting his/her current location can be displayed by distinguishing these from other map elements.

Incidentally, determining the current location by the user can be facilitated by displaying the names of each map element on the map, but this method is not so desirable for the following reason.

In other words, if the names of various map elements are displayed, the letters indicating the names overlap, and it would be difficult to read since liquid crystal display 151 is extremely small. Consequently, displaying the names of map elements must be limited to major ones. When the display of names is limited the user will not face much difficulty in determining his/her current location if the location is near one of the map elements being displayed. But determining the current location of the user can often become difficult as the user is not always necessarily near one of the map elements displayed. Hence, as in the present embodiment, the user can find the landmarks for determining his /her current location if the landmarks are listed since many landmarks can be denoted at once.

### C: Modification Examples

### (1) Method for Correcting the Current Location

In the embodiment of the present invention described above, the determination of the user's current location is facilitated by displaying landmarks specified by the user in a different display mode to other map elements on the map. But it does not have to be limited to this method. In another instance, the location of a specified landmark selected by the user from the landmarks listed on the map can in fact be the current location of the user, as in the case of the user being within, or right in front of the building which is the specified landmark, if so, it would be desirable if the location of the specified landmark is shown as the current location of the user as correction can be carried out much faster.

Also, in the embodiment, cursor 104 being displayed is shifted on the map in response to the operation of the user. But contrary to this, the map can be shifted with cursor 104 being displayed in a fixed position, for instance, at the center of liquid crystal display 151. In other words, as far as the location of cursor 104 on the map is concerned, it does not matter whether cursor 104 is shifted or the map is shifted.

Also, in the embodiment, although the location of cursor 104 was transmitted to path searching server 30 after it was converted to the latitude and longitude coordinate, it is also possible for the latitudes and the longitudes of the map being displayed at four corners of liquid crystal display 151 and the X-Y coordinate of cursor 104 on liquid crystal display 151 to be transmitted to path searching server 30. By this process, path searching server 30 can specify the domain of the displayed map. Furthermore, the location of cursor 104 on that map domain can be specified; therefore, the latitude and the longitude indicating the location of cursor 104 can be calculated.

### (2) Measuring Method

In the embodiment, the current location was calculated by determining the location between the locations of two base stations 21 and internally dividing the values of each electric field strength of the received annunciation signals, but it is not necessarily limited to this method. For calculating the location more simply, the middle point which connects the locations of two base stations can be regarded as the current location.

Also, PHS terminal 10 can carry out every calculation process of the current location. In this case, PHS terminal 10 needs to store the base station table in which is recorded the corresponding base station IDs (IDentifications) of each base station 21 and the corresponding latitude-longitude data showing the locations of each base station 21.

Also, position location calculation is not limited to the method of measuring by using base stations 21. For instance, it is possible to obtain the specified location by using a GPS function installed in PHS terminal 10. However, measuring by using base stations 21 causes a greater error in position location calculation than if a GPS function is used. Therefore, it is more effective if the GPS function is applied to the present invention in measuring by using base stations 21.

### (3) Mode of a PHS Terminal

In the embodiment, PHS terminal 10 is equipped with a calling function and a data communication function, but it is also possible for the PHS terminal to be equipped only with the data communication function.

Also, the calling function and the displaying function can be separated. For instance, by connecting the PHS terminal to the navigation terminal equipped with a liquid crystal display, it is possible to operate the two terminals together with the function equivalent to the above mentioned PHS terminal 10.

Furthermore, the terminal which the user carries is not necessarily limited to PHS terminal 10, but it can be a mobile communication terminal served in the mobile communication network. For instance, it can be a cellular telephone such as PDC (Personal Digital Cellular).

Also, operation unit 16 is not limited to the model shown in Fig. 3, but it can be equipped with, for instance a track ball, a jog dial, a joystick and so forth. Liquid crystal display 151 can be constructed as a touch panel and used as both display unit 15 and operation unit 16.

### (4) Mode of a Display

In the embodiment, the path is displayed by overlapping with the map, but it is not necessarily limited to this method. For instance, the path can also be displayed by displaying the names of the roads or the names of the intersections located on the calculated path as a text. The reason being the roads in a city are usually constructed on a vertical and horizontal axis. The path is more easily understood by displaying the roads and the intersections as a text. In this case, by allowing the user to choose whether to display the path on a map or to display it as text, the user can choose the display mode he/she wishes.

In the embodiment, there is no particular reference to the display layer, but the cursor, the map, the path, the menu, and the input screen can constitute one layer, or each one can constitute separate layers. By means of separate layers, information indicated in each layer does not need to be processed.

### (5) Direction Display

In the present embodiment, the map is displayed in which the direction of PHS terminal 10 is oriented toward the direction of the map on liquid crystal display 151, but the display direction is not limited to this method.

For instance, it is also possible to display only north, south, east and west directions on the map.

Also, for instance, when the map as well as PHS terminal 10 are oriented toward the same direction the user can be notified by a message, a color and so forth, of their corresponding orientation.

### (6) Configuration of Path Searching Server

The functions of path searching server 30 described in the embodiment do not necessarily have to be installed in a single server, but can be separated and installed in a plurality of servers. For instance, the location information producing function for calculating the location of PHS terminal 10, the map data providing function for providing the map data of the vicinity of the specified location by storing the map data and the path calculation function for calculating the path of the two specified locations can each be installed in a different server. Also, a server equipped with any two of these functions and a server equipped with the remaining function can be installed as well. Then the equivalent functions to the above mentioned path searching server 30 can be carried out by performing data communication among these servers.

### (7) Mode of the Program

The program for PHS terminal 10 to carry out the operations shown in the above mentioned Fig.6 and Fig.7 can be installed as an application program in PHS terminal 10. For instance, by recording in a recording medium such as a magnetic recording medium by which reading out is possible by using CPU 12 of PHS terminal 10, an optical recording medium or ROM, the program can be installed in PHS terminal 10. Also, a program such as this can be provided to PHS terminal 10 via a network such as a PHS network or the Internet.

### (8) Correction of the Destination

In the embodiment, the method for correcting the current location is described, but it is also possible for the destination to be corrected accordingly. For instance, when the destination is a relatively large place such as an amusement park or a park, the user might wish to specify its parking lot or its gate as the destination as opposed to the entire amusement park. In such a case, by specifying the destination in greater detail correction of the location can be carried out using the same method as the above mentioned correction method of current location.

### (9) Application Example

Without limiting to the example of the navigation explained in the embodiment, various other services can be provided to the user by using the measured location. For instance, the present invention can be applied even when the location of the user is notified to another user and so forth.

### Effects of the Invention

As explained above, by the present invention, the user can easily correct the location since the map elements which exist in the specified domain are listed from the obtained location, the map elements designated from the listed map elements by the user are displayed in a different display mode from other map elements on the map, and the location designated by the user is corrected to his/her location on the map.

Also, by the present invention, the user can easily correct the location since the map elements existing within the specified domain are listed from the obtained location, and the location of the map elements the user designated from the listed map elements are corrected to his/her location.

Also, by the present invention, the user can easily correct the location since the location calculated by using base station identifying information is listed by overlapping with the map, and the location which the user specifies is corrected to his/her own location on the map displayed.

## Claims

1. Portable terminal device, comprising:
an input means (16) adapted to receive input operations performed by a user;
a display means (15) adapted to display several kinds of information;
a location obtaining means (12) adapted to obtain location data indicating the location of the user;
a map display control means (12) adapted to display a location indicated by said location data on said display means (15) in overlap with a map of a specified domain of the location indicated by said location data;
**characterized by**
a list display control means (12) adapted to display a list of map elements corresponding to a specified domain of the location on said display means (15) and adapted to prompt the user to select at least two nearest map elements out of the list as current location; and
a correction means (12) adapted to correct the location indicated in the location data with the user's actual location specified by the user by selecting at least two map elements.

2. Portable terminal device according to claim 1, further comprising:
a map element display control means (12) adapted to display map elements indicated by names the user selected from among said displayed name list of map elements by an inputting operation on said display means (15) in a different display mode than other map elements on said map.

3. Portable terminal device according to claims 1 or 2, further comprising a communication means (11) which is adapted to receive from base stations annunciation signals containing base station identification information of the plurality of base stations of a mobile communication network; wherein
said location obtaining means (12) is adapted to obtain location data calculated on the basis of said base station identification information contained in said annunciation signals.

4. Portable terminal device according to claim 1 or 2, further comprising a communication means (11) which is adapted to perform communication with a server calculating location data for the portable terminal device, to receive from base stations annunciation signals containing base station identification information of the plurality of base stations of a mobile communication network, and to forward the base station identification information to the server.

5. Portable terminal device according to claim 4 , wherein the communication means (11) is adapted to obtain location data calculated on the basis of latitude and longitude information.

6. Portable terminal device according to claim 3 or 5, wherein the location obtaining means (12) or the server is adapted to read out from a table (13, 14, 34) containing latitude and longitude information of said base stations indicated by said base station identification information contained in said annunciation signals and to calculate said location data on the basis of said latitude and longitude information.

7. Portable terminal device according to claim 5, wherein the location obtaining means (12) or the server is adapted to read out from said table (13, 14, 34) latitude and longitude information of two base stations indicated by said base station identification information contained in annunciation signals received from two base stations and to calculate said location data of said user by determining the midpoint which connects said two base stations.

8. Portable terminal device according to anyone of claims 1 to 7, wherein the specified domain (100) is an area indicating a position error of the location indicated by said location data.

9. Portable terminal device according to one of claims 1 to 8, wherein said correcting means (12) comprises:
a means adapted to display a cursor on a map displayed on said display means (15);
a means adapted to shifting a location of said cursor on said map in response to operations carried out by said user by using said input means (16); and
a means adapted to correct the location of said map indicated by said cursor to be the location of said user in response to operations performed by said user on said input means (16).

10. Portable terminal device according to anyone of claims 1 to 9, further comprising:
a direction detecting means (18) adapted to detect a location a device is oriented toward; and
a direction display controlling means (12) adapted to cause said display means (15) to carry out a display for allowing a user to determine the direction of said displayed map based upon a direction detected by said direction detecting means (18).

11. A portable terminal device according to Claim 10, wherein said direction display controlling means (12), by matching a direction detected by said direction detecting means (18) with a direction on said map, is adapted to display said map on said display means (15).

12. A portable terminal device according Claim 10, wherein said direction display controlling means (12), when a direction detected by said direction detecting means (18) matches a direction of said displayed map, is adapted to display information to notify the user of said match on said display means (15) that the direction detected by said direction detecting means (18) matches the direction of said displayed map.

13. Portable terminal device according to one of the claims 1 to 12, further comprising:
a map data obtaining means for requesting map data adapted to display said map from said server by using said communication means (11), and to obtain map data transmitted from said server by using said communication means in response.

14. Portable terminal device according to one of the claims 1 to 13, further comprising:
a path display controlling means (12) adapted to display a path from the location of the device to a destination which is calculated on the basis of a destination location the user inputted by using said input means (16) and said corrected location of a device on said display means (15).

15. Portable terminal device according to claim 14, further comprising:
a destination display controlling means (12) adapted to display the location of a destination inputted by said user by using said input means (16) overlapped with a map on said display means (15); and
a destination correcting means (12) adapted to correct a location the user specifies by using said input means (16) to be the location of the destination on a map displayed by said destination display controlling means (12).

16. Portable terminal device according to claim 14 or 15, further comprising:
a path obtaining means adapted to receive path data showing a path from a location of a device to a destination which was calculated by said server via said communication means (11).

17. Location correction method, comprising the steps:
obtaining location data indicating a location of a portable terminal device;
displaying the location (104) indicated by said location data in overlap with a map of a specified domain of the location indicated by said location data;
***characterized by***
displaying a list of map elements corresponding to a specified domain (100) of the location on a display means (15) and prompting a portable terminal device user to select at least two nearest map elements out of the list as current location; and
correcting the location indicated in the location data with the user's actual location specified by the user by selecting at least two map elements.

18. Location correction method according to claim 17, further comprising the step:
displaying names a user selected from among the name-list of said displayed map elements in a display mode different from other map elements on said map.

19. Location correction method according to claim 17 or 18, wherein said step of obtaining said location data comprises calculating said location data on the basis of base station identification information contained in annunciation signals transmitted from base stations (21-1, 21-2, 21-3).

20. Location correction method according to claim 17 or 18, wherein said step of obtaining said location data comprises receiving from said base stations (21-1, 21-2, 21-3) said annunciation signals containing said base station identification information.

21. Location correction method according to one of the claims 17 to 20, wherein said step of obtaining said location data comprises reading out from a table (34) for storing latitude and longitude information of a plurality of base stations (21-1, 21-2, 21-3) said latitude and longitude information of said base stations indicated by said base station identification information contained in said annunciation signals and calculating said location data of said user on the basis of said latitude and longitude information of said base stations (21-1, 21-2, 21-3) and electric field strength of annunciation signals received from a plurality of base stations (21-1, 21-2, 21-3).

22. Location correction method according to one of claims 17 to 21, wherein said step of obtaining said location data comprises reading out from a table (34) for storing latitude and longitude information of a plurality of base stations (21-1, 21-2, 21-3) said latitude and longitude information of two base stations indicated by said base station identification information contained in annunciation signals received from two base stations and calculating said location data of said user by determining the midpoint which connects said two base stations.

23. Program for causing a computer to execute:
a process for obtaining location data indicating a location of a portable terminal device;
a process for displaying the location (104) indicated by said location data in overlap with a map of a specified domain of the location indicated by said location data;
***characterized by***
a process for displaying a list of map elements corresponding to a specified domain (100) of the location on said display means (15) and prompting a portable terminal device user to select at least two nearest map elements out of the list as current location; and
a process for correcting the location indicated in the location data with the user's actual location specified by the user by selecting at least two map elements.

24. Program according to claim 23, causing a computer to execute a process for displaying names of a map element selected by the user from among said displayed name-list by said inputting function, in a displaying mode which is different from other map elements on a map.

25. Program according to claims 23 or 24, causing a computer to execute said process for obtaining location data to comprise calculating said location data on the basis of electric field strength of signals received from a plurality of base stations.

26. Computer readable recording medium carrying a program according to one of claims 23 to 25.

## Patentansprüche

1. Tragbares Datenendgerät umfassend
eine Eingabeanordnung (16) zum Empfang von durch einen Benutzer durchgeführten Eingabeoperationen;
eine Anzeigeanordnung (15) zur Anzeige verschiedener Informationsarten;
eine Ortsgewinnungsanordnung (12) zur Gewinnung von dem Ort des Benutzers anzeigenden Ortsdaten; und
eine Kartenanzeige-Steueranordnung (12) zur Anzeige eines durch die Ortsdaten auf der Anzeigeanordnung (15) angegebenen Ortes überlappend mit einer Karte eines speziellen Gebietes des durch die Ortsdaten angegebenen Ortes;
**gekennzeichnet durch**
eine Listenanzeige-Steueranordnung (12) zur Anzeige einer Liste von Kartenelementen entsprechend einem speziellen Gebiet des Ortes auf der Anzeigeanordnung (15) sowie zum Veranlassen des Benutzers, wenigstens zwei Kartenelemente aus der Liste als laufenden Ort auszuwählen; und
eine Korrekturanordnung (12) zur Korrektur des in den Ortsdaten angegebenen Ortes mit dem **durch** den Benutzer spezifizierten aktuellen Ort **durch** Auswahl wenigstens zweier Kartenelemente.

2. Tragbares Datenendgerät nach Anspruch 1, weiterhin umfassend:
eine Kartenelementanzeige-Steueranordnung (12) zur Anzeige von Kartenelementen, die durch Namen angegeben werden, welche vom Benutzer aus der angezeigten Namensliste von Kartenelementen ausgewählt werden, durch eine Eingabeoperation auf der Anzeigeanordnung (15) in einem von anderen Kartenelementen auf der Karte verschiedenen Anzeigebetrieb.

3. Tragbares Datenendgerät nach Anspruch 1 oder 2, weiterhin umfassend eine Kommunikationsanordnung (11), welche zum Empfang von Meldesignalen von Basisstationen, welche Basisstations-Identifizierungsinformation der Vielzahl von Basisstationen eines mobilen Kommunikationsnetzwerks enthält; wobei
die Ortsgewinnungsanordnung (12) zur Gewinnung von Ortsdaten dient, die auf der Basis der in den Meldesignalen enthaltenen Basisstations-Identifizierungsinformation berechnet worden sind.

4. Tragbares Datenendgerät nach Anspruch 1 oder 2, weiterhin umfassend eine Kommunikationsanordnung (11), welche zur Durchführung einer Kommunikation mit einem Ortsdaten für das tragbare Datenendgerät berechnenden Server dient, um von Basisstationen Basisstations-Identifizierungsinformation der Vielzahl von Basisstationen eines mobilen Kommunikationsnetzwerkes enthaltende Stationsmeldesignale zu empfangen und die Basisstations-Identifizierungsinformation auf den Server zu geben.

5. Tragbares Datenendgerät nach Anspruch 4, in dem die Kommunikationsanordnung (11) zur Erlangung von auf der Basis von Breiten- und Längeninformation berechneten Ortsdaten dient.

6. Tragbares Datenendgerät nach Anspruch 3 oder 5, in dem die Ortsgewinnungsanordnung (12) oder der Server zur Auslesung aus einer Tabelle (13, 14, 34), welche Breiten- und Längeninformation enthält, die durch die in den Meldesignalen enthaltene Basisstations-Identifizierungsinformation angegeben ist, sowie zur Berechnung der Ortsdaten auf der Basis der Breiten- und Längeninformation dient.

7. Tragbares Datenendgerät nach Anspruch 5, in dem die Ortsgewinnungsanordnung (12) oder der Server zur Auslesung von Breiten- und Längeninformation von zwei Basisstationen aus der Tabelle (13, 14, 34), welche durch die in den von zwei Basisstationen empfangenen Meldesignalen enthaltenen Basisstations-Identifizierungsinformation angegeben ist, sowie zur Berechnung der Ortsdaten des Benutzers durch Bestimmung des die beiden Basisstationen verbindenden Mittelpunktes dient.

8. Tragbares Datenendgerät nach den Ansprüchen 1 bis 7, in dem das spezifizierte Gebiet (100) ein Bereich ist, der einen durch die Ortsdaten angegebenen Positionsfehler des Ortes anzeigt.

9. Tragbares Datenendgerät nach einem der Ansprüche 1 bis 8, in dem die Korrekturanordnung (12)
Mittel zur Anzeige eines Zeigers auf einer auf der Anzeigeanordnung (15) angezeigten Karte;
Mittel zur Verschiebung eines Ortes des Zeigers auf der Karte als Funktion von durch den Benutzer ausgeführten Operationen unter Verwendung der Eingabeanordnung (16); und
Mittel zur Korrektur des Ortes der Karte, der durch den Zeiger als Ort des Benutzers angezeigt ist, als Funktion der durch den Benutzer auf der Eingabeanordnung (16) durchgeführten Operationen
umfasst.

10. Tragbares Datenendgerät nach den Ansprüchen 1 bis 9, weiterhin umfassend:
eine Richtungsdetektoranordnung (18) zur Detektierung eines Ortes, auf den ein Gerät orientiert ist; und
eine Richtungsanzeige-Steueranordnung (12) zwecks Veranlassung der Anzeigeanordnung (15) zur Ausführung einer Anzeige, um einem Benutzer zu ermöglichen, die Richtung der angezeigten Karte auf der Basis einer durch die Richtungsdetektoranordnung (18) detektierten Richtung zu bestimmen.

11. Tragbares Datenendgerät nach Anspruch 10, in dem die Richtungsanzeige-Steueranordnung (12) zur Anzeige der Karte auf der Anzeigeanordnung (15) durch Anpassung einer durch die Richtungsdetektoranordnung (18) detektierten Richtung an eine Richtung auf der Karte dient.

12. Tragbares Datenendgerät nach Anspruch 10, in dem die Richtungs-Steueranordnung (12) zur Anzeige von Information zwecks Meldung einer Anpassung auf der Anzeigeanordnung (15) an den Benutzer dient, dass die durch die Richtungsdetektoranordnung (18) detektierte Richtung an die Richtung der angezeigten Karte angepasst ist, wenn eine durch die Richtungsdetektoranordnung (18) detektierte Richtung an eine Richtung der angezeigten Karte angepasst ist.

13. Tragbares Datenendgerät nach einem der Ansprüche 1 bis 12, weiterhin umfassend:
eine Kartendaten-Gewinnungsanordnung zur Anforderung von zur Anzeige der Karte vom Server unter Verwendung der Kommunikationsanordnung (11) dienenden Kartendaten sowie zur Gewinnung von vom Server übertragenen Daten unter Verwendung der ansprechenden Kommunikationsanordnung.

14. Tragbares Datenendgerät nach einem der Ansprüche 1 bis 13, weiterhin umfassend:
eine Wegeanzeige-Steueranordnung (12) zur Anzeige eines Weges vom Ort des Gerätes zu einem Ziel, der auf der Basis eines Zielortes berechnet wird, welcher vom Benutzer unter Verwendung der Eingabeanordnung (16) und des korrigierten Geräteortes auf der Anzeigeanordnung (15) angegeben wird.

15. Tragbares Datenendgerät nach Anspruch 14, weiterhin umfassend:
eine Zielanzeige-Steueranordnung (12) zur Anzeige des Zielortes, der vom Benutzer unter Verwendung der Eingabeanordnung (16) überlappend mit einer Karte auf der Anzeigeanordnung (15) eingegeben wird; und
eine Zielkorrekturanordnung (12) zur Korrektur eines Ortes, den der Benutzer unter Verwendung der Eingabeanordnung (16) als Zielort auf einer durch die Zielanzeige-Steueranordnung (12) angezeigten Karte spezifiziert.

16. Tragbares Datenendgerät nach Anspruch 14 oder 15, weiterhin umfassend:
eine Wegegewinnungsanordnung zum Empfang von Wegedaten, welche einen Weg von einem Geräteort zu einem Ziel zeigen, der durch den Server über die Kommunikationsanordnung (11) berechnet wurde.

17. Ortskorrekturverfahren umfassend die Schritte:
Gewinnen von einen Ort eines tragbaren Endgerätes anzeigenden Ortsdaten; und
Anzeigen des durch die Ortsdaten angegebenen Ortes überlappend mit einer Karte eines spezifizierten Gebietes des durch die Ortsdaten angegebenen Ortes;
**dadurch gekennzeichnet, dass**
eine Liste von einem spezifizierten Gebiet (100) des Ortes entsprechenden Kartenelementen auf einer Anzeigeanordnung (15) angezeigt wird, welche der Benutzer eines tragbaren Datenendgerätes veranlasst, wenigstens zwei nächstliegende Kartenelemente aus der Liste als laufender Ort auszuwählen; und
der in den Ortsdaten gegebene Ort mit dem aktuellen Ort des Benutzers, der durch den Benutzer durch Auswahl wenigstens zweier Kartenelemente spezifiziert ist, korrigiert wird.

18. Ortskorrekturverfahren nach Anspruch 17, weiterhin umfassend folgenden Schritt:
Anzeigen von Namen, die ein Benutzer aus den in einem Anzeigebetrieb angezeigten Kartenelementen ausgewählt hat, welche von anderen Kartenelementen auf der Karte verschieden sind.

19. Ortskorrekturverfahren nach Anspruch 17 oder 18, bei dem der Schritt der Gewinnung von Ortsdaten das Berechnen der Ortsdaten auf der Basis von in Meldesignalen enthaltener Basisstations-Identifizierungsinformation umfasst, die von Basisstationen (21-1, 21-2, 21-3) übertragen werden.

20. Ortskorrekturverfahren nach Anspruch 17 oder 18, bei dem der Schritt der Gewinnung der Ortsdaten das Empfangen der die Basisstations-Identifizierungsinformation enthaltenden Meldesignale umfasst.

21. Ortskorrekturverfahren nach einem der Ansprüche 17 bis 20, bei dem der Schritt der Gewinnung der Ortsdaten das Auslesen von Breiten- und Längeninformation der Basisstationen, die durch in den Meldesignalen enthaltene Basisstations-Identifizierungsinformation angegeben ist, aus einer Tabelle zur Speicherung der Breiten- und Längeninformation einer Vielzahl von Basisstationen (21-1, 21-2, 21-3) sowie das Berechnen der Ortsdaten des Benutzers auf der Basis der Breiten- und Längeninformation der Basisstationen (21-1, 21-2, 21-3) und der elektrischen Feldstärke von von einer Vielzahl von Basisstationen (21-1, 21-2, 21-3) empfangenen Meldesignalen umfasst.

22. Ortskorrekturverfahren nach einem der Ansprüche 17 bis 21, bei dem der Schritt der Gewinnung der Ortsdaten das Auslesen von Breiten- und Längeninformation von zwei Basisstationen, die durch die Basisstations-Identifizierungsinformation in von zwei Basisstationen empfangenen Meldesignalen angegeben ist, aus einer Tabelle (34) zur Speicherung der Breiten- und Längeninformation einer Vielzahl von Basisstationen (21-1, 21-2, 21-3) sowie das Berechnen der Ortsdaten des Benutzers durch Bestimmung des die beiden Basisstationen verbindenden Mittelpunktes umfasst.

23. Programm zur Ausführung durch einen Computer:
ein Verfahren zur Gewinnung von dem Ort eines tragbaren Datenendgerätes angegebenen Ortsdaten; und
ein Verfahren zur Anzeige des durch die Ortsdaten angegebenen Ortes (104) überlappend mit einer Karte eines spezifizierten Gebietes des durch die Ortsdaten angegebenen Ortes;
**gekennzeichnet durch**
ein Verfahren zur Anzeige einer Liste von Kartenelementen entsprechend einem spezifizierten Gebiet (100) des Ortes auf einer Eingabeanordnung (15) sowie zur Veranlassung eines Benutzers des tragbaren Datenendgerätes, wenigstens zwei nächstliegende Kartenelemente aus der Liste als laufender Ort auszuwählen; und
ein Verfahren zur Korrektur des in den Ortsdaten angegebenen Ortes mit dem aktuellen Benutzerort der durch den Benutzer **durch** Auswahl wenigstens zweier Kartenelemente spezifiziert ist.

24. Programm nach Anspruch 23, zur Ausführung eines Verfahrens durch einen Computer zur Anzeige von Namen eines durch den Benutzer aus der angezeigten Namenliste ausgewählten Kartenelementes durch die Eingabefunktion in einem Anzeigebetrieb, das von anderen Kartenelementen auf einer Karte verschieden ist.

25. Programm nach Anspruch 23 oder 24, zur Ausführung des Verfahrens der Gewinnung von Ortsdaten durch einen Computer umfassend die Berechnung der Ortsdaten auf der Basis der elektrischen Feldstärke von von einer Vielzahl von Basisstationen empfangenen Signalen.

26. Durch einen Computer lesbares Aufzeichnungsmedium zur Ausführung eines Programms nach einem der Ansprüche 23 bis 25.

## Revendications

1. Dispositif terminal portable, comprenant :
un moyen d'entrée (16) adapté à recevoir des opérations d'entrée exécutées par un utilisateur ;
un moyen d'affichage (15) adapté à afficher plusieurs sortes d'informations ;
un moyen d'obtention de localisation (12) adapté à obtenir des informations de localisation indiquant l'emplacement de l'utilisateur ;
un moyen de commande d'affichage de carte (12) adapté à afficher l'emplacement indiqué par lesdites données de localisation sur ledit moyen d'affichage (15) en superposition à une carte d'un domaine spécifié de l'emplacement indiqué par lesdites données de localisation ;
**caractérisé par**
un moyen de commande d'affichage de liste (12) adapté à afficher une liste d'éléments cartographiques correspondant à un domaine spécifié de l'emplacement sur ledit moyen d'affichage (15) et adapté à inviter l'utilisateur à sélectionner comme emplacement courant au moins deux éléments cartographiques les plus proches dans la liste ; et
un moyen de correction (12) adapté à corriger l'emplacement indiqué dans les données de localisation avec l'emplacement réel de l'utilisateur spécifié par l'utilisateur en sélectionnant au moins deux éléments cartographiques.

2. Dispositif terminal portable selon la revendication 1, comprenant en outre :
un moyen de commande d'affichage d'éléments cartographiques (12) adapté à afficher des éléments cartographiques indiqués par des noms que l'utilisateur a sélectionnés dans ladite liste affichée de noms d'éléments cartographiques par une opération d'entrée sur ledit moyen d'affichage (15) dans un mode d'affichage différent de celui d'autres éléments cartographiques sur ladite carte.

3. Dispositif terminal portable selon la revendication 1 ou 2, comprenant en outre un moyen de communication (11) qui est adapté à recevoir des stations de base les signaux indicateurs contenant des informations d'identification de station de base relatives à la pluralité de stations de base d'un réseau de communication mobile ; dans lequel
ledit moyen d'obtention de localisation (12) est adapté à obtenir des données de localisation calculées en fonction desdites informations d'identification de station base contenues dans lesdits signaux indicateurs.

4. Dispositif terminal portable selon la revendication 1 ou 2, comprenant en outre un moyen de communication (11) qui est adapté à réaliser la communication avec un serveur calculant les données de localisation pour le dispositif terminal portable, à recevoir des stations de base les signaux indicateurs contenant des informations d'identification de station de base relatives à la pluralité de stations de base d'un réseau de communication mobile, et à transmettre au serveur les informations d'identification de station de base.

5. Dispositif terminal portable selon la revendication 4, dans lequel le moyen de communication (11) est adapté à obtenir les données de localisation calculées en fonction des informations de latitude et de longitude.

6. Dispositif terminal portable selon la revendication 3 ou 5, dans lequel le moyen d'obtention de localisation (12) ou le serveur est adapté à lire dans une table (13, 14, 34) contenant des informations de latitude et de longitude relatives auxdites stations de base indiquées par lesdites informations d'identification de station de base contenues dans lesdits signaux indicateurs et à calculer lesdites données de localisation en fonction desdites informations de latitude et de longitude.

7. Dispositif terminal portable selon la revendication 5, dans lequel le moyen d'obtention de localisation (12) ou le serveur est adapté à lire dans ladite table (13, 14, 34) les informations de latitude et de longitude relatives à deux stations de base indiquées par lesdites informations d'identification de station de base contenues dans les signaux indicateurs reçus en provenance de deux stations de base et à calculer lesdites données de localisation dudit utilisateur en déterminant le point milieu qui relie les deux stations de base.

8. Dispositif terminal portable selon l'une quelconque des revendications 1 à 7, dans lequel le domaine spécifié (100) est une zone indiquant une erreur de position de l'emplacement indiquée par lesdites données de localisation.

9. Dispositif terminal portable selon l'une des revendications 1 à 8, dans lequel ledit moyen de correction (12) comprend :
un moyen adapté à afficher un curseur sur une carte affichée sur ledit moyen d'affichage (15) ;
un moyen adapté à déplacer un emplacement dudit curseur sur ladite carte en réponse à des opérations effectuées par ledit utilisateur à l'aide dudit moyen d'entrée (16) ; et
un moyen adapté à corriger l'emplacement de ladite carte indiqué par ledit curseur pour en faire l'emplacement dudit utilisateur en réponse à des opérations effectuées par ledit utilisateur sur ledit moyen d'entrée (16).

10. Dispositif terminal portable selon l'une quelconque des revendications 1 à 9, comprenant en outre :
un moyen de détection de direction (18) adapté à détecter un emplacement vers lequel un dispositif est orienté ; et
un moyen de commande d'affichage de direction (12) adapté à amener ledit dispositif d'affichage (15) à réaliser un affichage pour permettre à un utilisateur de déterminer la direction de ladite carte affichée en fonction d'une direction détectée par ledit moyen de détection de direction (18).

11. Dispositif terminal portable selon la revendication 10, dans lequel ledit moyen de commande d'affichage de direction (12), en faisant correspondre une direction détectée par ledit moyen de détection de direction (18) avec une direction sur ladite carte, est adapté à afficher ladite carte sur ledit moyen d'affichage (15).

12. Dispositif terminal portable selon la revendication 10, dans lequel ledit moyen de commande d'affichage de direction (12), lorsqu'une direction détectée par ledit moyen de détection de direction (18) correspond à une direction de ladite carte affichée, est adapté à afficher des informations pour signaler audit utilisateur ladite correspondance sur ledit moyen d'affichage (15) indiquant que la direction détectée par ledit moyen de détection de direction (18) correspond à la direction de ladite carte affichée.

13. Dispositif terminal portable selon l'une quelconque des revendications 1 à 12, comprenant en outre :
un moyen d'obtention de données cartographiques pour demander au serveur les données cartographiques adaptées à afficher ladite carte en utilisant ledit moyen de communication (11), et à obtenir en réponse les données cartographiques émises par ledit serveur en utilisant ledit moyen de communication.

14. Dispositif terminal portable selon l'une quelconque des revendications 1 à 13, comprenant en outre :
un moyen de commande d'affichage de parcours (12) adapté à afficher un parcours allant de l'emplacement du dispositif jusqu'à la destination qui est calculée en fonction d'un emplacement de destination que l'utilisateur a saisi en entrée en utilisant ledit moyen d'entrée (16) et en fonction dudit emplacement corrigé d'un dispositif sur ledit moyen d'affichage (15).

15. Dispositif terminal portable selon la revendication 14, comprenant en outre :
un moyen de commande d'affichage de destinations (12) adapté à affiché l'emplacement d'une destination saisie en entrée par ledit utilisateur à l'aide dudit moyen d'entrée (16) superposé avec une carte sur ledit moyen d'affichage (15) ; et
un moyen de correction de destinations (12) adapté à corriger un emplacement que l'utilisateur définit à l'aide dudit moyen d'entrée (16) comme étant l'emplacement de la destination sur la carte affichée par ledit moyen de commande d'affichage de destinations (12).

16. Dispositif terminal portable selon la revendication 14 ou 15, comprenant en outre
un moyen d'obtention de parcours adapté à recevoir des données de parcours montrant un parcours allant d'un emplacement d'un dispositif jusqu'à une destination qui a été calculée par ledit serveur par le biais du moyen de communication (11).

17. Procédé de correction de localisation, comprenant les étapes consistant à :
obtenir des données de localisation indiquant un emplacement d'un dispositif terminal portable;
afficher l'emplacement (104) indiqué par lesdites données de localisation en superposition à une carte d'un domaine spécifié de l'emplacement indiqué par lesdites données de localisation
**caractérisé par** les étapes consistant à
afficher une liste d'éléments cartographiques correspondant au domaine spécifié (100) de l'emplacement sur un moyen d'affichage (15) et inviter un utilisateur de dispositif terminal portable à sélectionner comme emplacement actuel au moins deux éléments cartographiques les plus proches dans la liste ; et
corriger l'emplacement indiqué dans les données de localisation par l'emplacement effectif de l'utilisateur spécifié par l'utilisateur en sélectionnant au moins deux éléments cartographiques.

18. Procédé de correction de localisation selon la revendication 17, comprenant en outre l'étape consistant à :
afficher les noms qu'un utilisateur a sélectionnés dans une liste de noms desdits éléments cartographiques affichés dans un mode d'affichage différent de celui des autres éléments cartographiques sur ladite carte.

19. Procédé de correction de localisation selon la revendication 17 ou 18, dans lequel ladite étape consistant à obtenir lesdites données de localisation comprend l'opération consistant à calculer lesdites données de localisation en fonction des informations d'identification dé station de base contenues dans les signaux indicateurs émis par les stations de base (21-1, 21-2, 21-3).

20. Procédé de correction de localisation selon la revendication 17 ou 18, dans lequel ladite étape consistant à obtenir lesdites données de localisation comprend l'opération consistant à recevoir desdites stations de base (21-1, 21-2, 21-3) lesdits signaux indicateurs contenant lesdites informations d'identification de station de base.

21. Procédé de correction de localisation selon l'une des revendications 17 à 20, dans lequel ladite étape consistant à obtenir lesdites données de localisation comprend l'opération consistant à lire dans une table (34) servant à stocker les informations de latitude et de longitude relatives à une pluralité de stations de base (21-1, 21-2, 21-3) lesdites informations de latitude et de longitude desdites stations de base indiquées par lesdites informations d'identification de station de base contenues dans lesdits signaux indicateurs et l'opération consistant à calculer lesdites données de localisation dudit utilisateur en fonction desdites informations de latitude et de longitude desdites stations de base (21-1, 21-2, 21-3) et en fonction de l'intensité du champ électrique des signaux indicateurs reçus en provenance d'une pluralité de stations de base (21-1, 21-2, 21-3).

22. Procédé de correction de localisation selon l'une des revendications 17 à 21, dans lequel ladite étape consistant à obtenir lesdites données de localisation comprend l'opération consistant à lire dans une table (34) servant à stocker les informations de latitude et de longitude relatives à une pluralité de stations de base (21-1, 21-2, 21-3) lesdites informations de latitude et de longitude de deux stations de base indiquées par lesdites informations d'identification de station de base contenues dans les signaux indicateurs reçus en provenance de deux stations de base et l'opération consistant à calculer lesdites données de localisation dudit utilisateur en déterminant le point milieu qui relie lesdites deux stations de base.

23. Programme permettant d'amener un calculateur à exécuter :
un processus permettant d'obtenir les données de localisation indiquant un emplacement d'un dispositif terminal portable ;
un processus permettant d'afficher l'emplacement (104) indiqué par lesdites données de localisation en superposition à une carte d'un domaine spécifié de l'emplacement indiqué par lesdites données de localisation ;
***caractérisé par***
un processus permettant d'afficher une liste d'éléments cartographiques correspondant à un domaine spécifié (100) de l'emplacement sur ledit moyen d'affichage (15) et inviter un utilisateur de dispositif terminal portable à sélectionner comme emplacement actuel au moins deux éléments cartographiques les plus proches dans la liste ; et
un processus permettant de corriger l'emplacement indiqué dans les données de localisation par l'emplacement actuel de l'utilisateur spécifié par l'utilisateur en sélectionnant au moins deux éléments cartographiques.

24. Programme selon la revendication 23, amenant un calculateur à exécuter un processus permettant d'afficher les noms d'un élément cartographique sélectionné par l'utilisateur dans ladite liste affichée de noms au moyen de ladite fonction d'entrée, dans un mode d'affichage qui est différent de celui des autres éléments cartographiques sur la carte.

25. Programme selon la revendication 23 ou 24, amenant un calculateur à exécuter ledit processus permettant d'obtenir les données de localisation et comprendre l'étape consistant à calculer lesdites données de localisation en fonction de l'intensité de champ électrique des signaux reçus en provenance d'une pluralité de stations de base.

26. Support d'enregistrement lisible par un calculateur portant un programme selon l'une des revendications 23 à 25.
